# EUROPÄISCHE PATENTSCHRIFT

(11) **EP 2 185 355 B1**
(45) Veröffentlichungstag und Bekanntmachung des Hinweises auf die Patenterteilung: **09.10.2013**
(21) Anmeldenummer: 08801124.2
(22) Anmeldetag: 11.08.2008
(51) Int. Cl.: B32B 7/10, B32B 37/00, B42D 15/10, C08J 5/12

(54) **VERFAHREN ZUR HERSTELLUNG EINES SICHERHEITS- UND/ODER WERTDOKUMENTS UND SO HERGESTELLTES DOKUMENT**
METHOD FOR PRODUCING A SECURITY AND/OR VALUABLE DOCUMENT AND DOCUMENT THUS OBTAINED
PROCÉDÉ DE FABRICATION D'UN DOCUMENT DE SÉCURITÉ ET/OU DE PAPIER-VALEUR, ET DOCUMENT AINSI OBTENU

(30) Priorität: 09.08.2007 DE 102007037721
(43) Veröffentlichungstag der Anmeldung: 19.05.2010
(73) Patentinhaber: Bundesdruckerei GmbH, 10958 Berlin (DE)
(72) Erfinder: PFLUGHOEFFT, Malte, 13347 Berlin (DE); FISCHER, Jörg, 13053 Berlin (DE); PAESCHKE, Manfred, 16352 Basdorf (DE); MUTH, Oliver, 12277 Berlin (DE)
(74) Vertreter: Jungblut, Bernhard Jakob
(86) Internationale Anmeldenummer: PCT/DE2008/001288
(87) Internationale Veröffentlichungsnummer: WO 2009/018817

(56) Entgegenhaltungen:
- EP-A- 1 886 835
- DE-A1- 10 013 410
- US-A1- 2002 014 306
- US-A1- 2005 084 693

## Beschreibung

### Gebiet der Erfindung

Die Erfindung betrifft ein Verfahren zur Herstellung eines Sicherheits- und/oder Wertdokuments mit zumindest einem Sicherheitselement, wobei das Sicherheits- und/oder Wertdokument aus zumindest zwei miteinander im Wege der thermischen Laminierung verbundenen Polymerschichten gebildet wird, wobei das Sicherheitselement im Zuge der thermischen Laminierung zwischen benachbarte Polymerschichten oder in eine Polymerschicht eingebettet wird, und wobei zumindest eine der Polymerschichten aus einem Polymer mit einer Glastemperatur von weniger als 140 °C gebildet ist, sowie ein mit einem solchen Verfahren hergestelltes Sicherheits- und/oder Wertdokument.

### Stand der Technik und Hintergrund der Erfindung

Ein Verfahren der eingangs genannten Art ist aus der Praxis bekannt. Hierbei werden kartenförmige Sicherheits-und/oder Wertdokumente bei niedrigen Prozesstemperaturen hergestellt, beispielsweise unter Verwendung von PVC (Glastemperatur T_{g} = 91 °C). Dies ermöglicht den Einbau bzw. das Einlaminieren von Sicherheitselementen zwischen den Polymerschichten in einfacher Weise im Zuge des Laminierprozesses und so in prozesstechnisch einfacher Weise. Nachteilig bei den insofern bekannten Sicherheits-und/oder Wertdokumenten ist, dass sie relativ leicht dadurch zu manipulieren sind, dass die Polymerschichten delaminiert werden und so Zugriff auf das Sicherheitselement erlangt wird. Daher finden solche Technologien bei Dokumenten Anwendung, deren Manipulation keine Gefährdung des Dokuments darstellt, beispielsweise bei Telefonkarten. Für die Herstellung beispielsweise von Identitätsdokumenten, wie Ausweisen, ist diese Technologie wegen der Manipulationsgefahr jedoch nicht geeignet.

Weiterhin bekannt ist es z.B. aus DE-A-10013410, Sicherheits- und/oder Wertdokumente mit Polycarbonat (PC) Folien zu bilden, wobei das Polymer eine Glastemperatur von typischerweise 149 °C aufweist. Es erfolgt eine Lamination der Folien bzw. Schichten bei hohen Temperaturen und Drucken, typischerweise 200 °C und Flächenpressungen von 300 bis 500 N/mm². Diese Prozessbedingungen gewährleisten einen innigen Verbund der verschiedenen Schichten zu einem monolithischen Kartenkörper, dessen integrierte Sicherheitselemente gegen Manipulation geschützt sind, da eine Delamination praktisch unmöglich ist. Zwar können einige Sicherheitselemente, wie beispielsweise RFID Chips hierbei im Zuge des Laminierens zwischen Schichten einlaminiert werden, jedoch ist man dabei auf Komponenten (Chip, Antenne, Kontakte) beschränkt, welche die thermischen Belastungen ohne Funktionsverlust oder Funktionsbeschränkung aufweisen. Aber selbst wenn die Sicherheitselemente die thermische Belastung während der Lamination ohne Funktionsverlust oder -beschränkung überstehen, führt eine übermäßige Belastung zu einer unerwünschten künstlichen Alterung. Zudem müssen in Sicherheits- und/oder Wertdokument oft weitere oder andere Sicherheitsmerkmale integriert werden, welche die beschriebene thermische Belastung nicht ohne Zerstörung überstehen. Daher ist es zur Vermeidung der unzulässigen thermischen Belastung bekannt, solche Sicherheitsmerkmale nachträglich in das Sicherheits- und/oder Wertdokument zu integrieren. Dazu wird für das Sicherheitselement, beispielsweise einen kontaktbehafteten Chip, in den zuvor laminierten Schichtverbund eine Kavität gefräst und das Sicherheitselement anschließend mit einem Kleber in den Schichtverbund eingeklebt. Dabei entsteht zum einen kein hinreichend inniger Verbund zwischen dem Sicherheitselement und dem Schichtverbund. Zum anderen erfordert diese Technologie zusätzlich Verfahrensschritte zum Einbau des Sicherheitselements (Fräsen, Kleben, etc.), was prozesstechnisch aufwändig und teuer ist.

Aus der Praxis ist auch der Einsatz anderer spezieller Polymere für die Schichten bzw. Folien bekannt, deren Glastemperatur deutlich niedriger als jene des Polycarbonats ist, wodurch die Prozessbedingungen deutlich modifiziert werden können, beispielsweise auf Laminationstemperaturen unter 150 °C, was das Einlaminieren von temperaturempfindlichen Sicherheitselementen erlaubt. Es gelten die gleichen Nachteile, wie vorstehend zu Sicherheits- und/oder Wertdokument aus PVC Schichten beschrieben.

### Technisches Problem der Erfindung

Der Erfindung liegt daher das technische Problem zu Grunde, ein Verfahren zur Herstellung eines gegen Delaminieren sicheren Sicherheits- und/oder Wertdokumentes anzugeben, mittels welchen auch temperaturempfindliche Sicherheitselemente im Wege des Einlaminierens sicher integriert werden können.

Dieses Problem ist mit den Merkmalen des Anspruchs 1 gelöst.

### Grundzüge der Erfindung und bevorzugte Ausführungsformen

Zur Lösung dieses technischen Problems lehrt die Erfindung, dass die Polymerschichten aus gleichen oder verschiedenen Polymeren gebildet sind, deren Grundpolymere gleiche oder verschiedene miteinander reaktive Gruppen tragen, wobei bei einer Laminiertemperatur von weniger als 200°C reaktive Gruppen einer ersten Polymerschicht mit reaktiven Gruppen einer zweiten Polymerschicht reagieren.

Mit der Erfindung wird mehrerlei erreicht. Zum Ersten können Schichten aus Polymeren eingesetzt werden, welche eine gegenüber Polycarbonat niedrigere Glastemperatur aufweisen, wodurch die Laminiertemperatur herabgesetzt werden kann, ohne dass dadurch der innige Verbund der laminierten Schichten gefährdet wird. Dies liegt daran, dass die verschiedenen Polymerschichten auf Grund der Reaktion der jeweiligen reaktiven Gruppen nicht mehr ohne weiteres delaminiert werden können. Denn es findet zwischen den Schichten eine reaktive Kopplung zwischen den verschiedenen Schichten statt, gleichsam ein reaktives Laminieren. Zum zweiten wird ermöglicht, dass wegen der niedrigeren Laminiertemperatur Sicherheitselemente im Zuge des Laminierprozesses einfach einlaminiert werden, welche vergleichsweise temperaturempfindlich sind, und zwar ohne jegliche Funktionsbeeinträchtigung aufgrund des Laminierprozesses. Es wird im Ergebnis ein vereinfachtes Verfahren zur Herstellung manipulationssicherer Sicherheits- und/oder Wertdokumente mit temperaturempfindlichen Sicherheitselementen geschaffen. Zum Dritten werden die Kosten bei der Produktion gesenkt, da weniger Energie und Zeit zum Heizen und Kühlen benötigt wird. Schließlich ist vorteilhaft, dass durch die reduzierte thermische Belastung die eingesetzten Sicherheitselemente nur einer vergleichsweise geringen künstlichen Alterung ausgesetzt sind.

Im Einzelnen bestehen verschiedene Möglichkeiten der weiteren Ausbildung.

Bevorzugt ist es, wenn die Glastemperatur der zumindest einen Polymerschicht vor der thermischen Laminierung weniger als 120 °C (oder auch weniger als 110 °C oder als 100 °C) beträgt, wobei die Glastemperatur dieser Polymerschicht nach der thermischen Laminierung durch Reaktion reaktiver Gruppen des Grundpolymers der Polymerschicht miteinander um zumindest 5 °C, vorzugsweise zumindest 20 °C, höher als die Glastemperatur vor der thermischen Laminierung ist. Hierbei erfolgt nicht nur eine reaktive Kopplung der miteinander zu laminierenden Schichten, vielmehr erfolgt eine Erhöhung des Molekulargewichts und somit der Glastemperatur durch Vernetzung des Polymers innerhalb der Schicht und zwischen den Schichten. Dies erschwert ein Delaminieren zusätzlich.

Vorzugsweise beträgt die Laminiertemperatur weniger als 180 °C, besser noch weniger als 150 °C. Dadurch lassen sich auch vergleichsweise sehr temperaturempfindliche Sicherheitselemente, beispielsweise enthaltend organische Halbleiter oder biologische Moleküle, zerstörungsfrei im Zuge des Laminierens einlaminieren. In der Regel liegt die Laminiertemperatur oberhalb von 70°C, meist oberhalb von 80°C, 90°C oder auch 100°C.

Die Anzahl der Polymerschichten liegt typischerweise aber nicht zwingend im Bereich von 2 bis 30, vorzugsweise im Bereich von 6 bis 10. Die Schichtdicken der Polymerschichten liegen typischerweise aber nicht zwingend jeweils unabhängig voneinander im Bereich von 30 bis 300 µm, vorzugsweise 50 bis 200 µm.

Grundsätzlich sind für die verschiedenen Polymerschichten alle fachüblichen Grundpolymere einsetzbar. Dabei können aufeinanderfolgende Polymerschichten aus dem gleichen Grundpolymer oder aus verschiedenen Grundpolymeren gebildet sein. Beispielsweise können die Polymere der Polymerschichten gleich oder verschieden und unabhängig voneinander aus einem Grundpolymer gebildet sein, welches ausgewählt ist aus der Gruppe bestehend aus "PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren) und Copolymere solcher Polymere". Bevorzugt ist es, wenn zumindest einer der Polymerschichten aus dem Grundpolymer PC gebildet ist. Im Einzelnen kann beispielsweise eine Schichtfolge gebildet werden, worin die aufeinander folgenden Schichten aus den Grundpolymeren PC/PET, PC/PMMA, PC/TPU, PC/PE, PC/PP, PC/PI, PET/PC/PET, PMMA/PC/PMMA, TPU/PC/TPU, PE/PC/PE, oder PP/PC/PP gebildet sind, und wobei optional weitere Schichten angeschlossen werden können, welche aus gleichen oder verschiedenen Grundpolymeren gebildet sind.

Die Auswahl der geeigneten reaktiven Gruppen ist für .den Fachmann für Polymerchemie unschwer möglich. Beispielhafte reaktiven Gruppen sind ausgewählt aus der Gruppe bestehend aus "-CN, -OCN, -NCO, -NC, -SH, -Sₓ, -Tos, -SCN, -NCS, -H, Epoxy (-CHOCH₂), -NH₂, -NN⁺, -NN-R, -OH, -COOH, -CHO, - COOR, -Hal (-F, -Cl, -Br, -I), -Me-Hal (Me = zumindest zweiwertiges Metall, beispielsweise Mg), -Si(OR)₃, -SiHal₃, -CH=CH₂, und -COR", wobei R eine beliebige reaktive oder nicht-reaktive Gruppe sein kann, beispielsweise -H, -Hal, Cl-C20-Alkyl, C3-C20-Aryl, C4-C20-ArAlkyl, jeweils verzweigt oder linear, gesättigt oder ungesättigt, optional substituiert, oder korrespondierende Heterozyklen mit einem oder mehreren gleichen oder verschiedenen Heteroatomen N, O, oder S". Andere reaktive Gruppen sind selbstverständlich möglich. Hierzu gehören die Reaktionspartner der Diels-Alder Reaktion oder einer Metathese.

Als Paarungen reaktiver Gruppen für die jeweiligen Polymere bzw. Grundpolymere der verschiedenen zu laminierenden Polymerschichten sind lediglich beispielsweise und nicht beschränkend zu nennen: NCO/OH, NCO/SH, NCS/OH, NCS/SH, CN/OH, CN/SH, Epoxy/COOH, Epoxy/OH, Epoxy/SH, NH2/COOH, CHO/OH, CHO/NH2, , Alken/COOH, Alken/OH, Alken/SH, Alken/Hal, Alken/Alkadien (Diels-Alder-Reaktion), Alken/-NN⁺ oder -NN-R (radikalische Polymerisation), NN⁺ oder -NN-R/OH, NN⁺/Aryl, Alken/-NN⁺ (Kupplung zu Hydrazon), COOH/Tos, Me-Hal/Hal, Si(OR)₃/ -SiHal₃ (in verschiedenen Kombinationen).

Dabei ist eine erste reaktive Gruppe eines Paares an einem Grundpolymer einer ersten Polymerschicht gebunden und die zweite reaktive Gruppe eines Paares an einem Grundpolymer einer zweiten und mit der ersten Polymerschicht zu verbindenden Polymerschicht covalent gebunden. Selbstverständlich sind auch alle anderen dem Fachmann der Polymerchemie bekannten und hier nicht genannte Paarungen von reaktiven Gruppen möglich.

Im Rahmen der Erfindung ist es wesentlich, dass die Polymerschichten der Erfindung strukturelle Polymerschichten sind, i.e. nicht lediglich Schichten zur Haftvermittlung bzw. Klebstoffschichten. Dabei meint der Begriff einer strukturellen Polymerschicht, dass diese eine die mechanische Festigkeit des Dokumentes zumindest mittragende Funktion aufweist. Solche strukturellen Polymerschichten sind typischerweise per se und bei Raumtemperatur fest, weisen eine Glastemperatur von meist mehr als 90°C auf und sind bei 20°C nicht klebend. Ebenso wesentlich ist, dass die Polymerschichten jedenfalls in Teilbereichen unmittelbar miteinander kontaktiert und laminiert werden, i.e. es werden in solchen Teilbereichen keine Haftvermittlerschichten zwischengeschaltet.

Natürlich ist auch eine vollflächiger Kontakt zwischen den Polymerschichten möglich.

Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokument reduziert wird. Solche elastizitätsvermittelnde Spacergruppen sind dem Fachmann wohl vertraut und brauchen daher hier nicht weiter beschrieben zu werden. Lediglich beispielhaft seien Spacergruppen genannt, welche ausgewählt sind aus der Gruppe bestehend aus "-(CH₂)ₙ-, - (CH₂-CH₂-O)ₙ-, -(SiR₂-O)ₙ-, -(C₆H₄)ₙ-, -(C₆H₁₀)ₙ-, Cl-Cn-Alkyl, C3-C(n+3)-Aryl, C4-C(n+4)-ArAlkyl, jeweils verzweigt oder linear, gesättigt oder ungesättigt, optional substituiert, oder korrespondierende Heterozyklen mit einem oder mehreren , gleichen oder verschiedenen Heteroatomen O, N, oder S" mit n=1 bis 20, vorzugsweise 1 bis 10.

Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2006, verwiesen.

Zumindest ein Sicherheitselement kann eine maximal zulässige thermische Belastung von 190 °C, vorzugsweise von 150°C, höchstvorzugsweise von 120 °C, für eine Dauer von 1 bis 600 s aufweisen. Selbstverständlich können einige oder auch alle Sicherheitselemente auch eine höhere maximal zulässige thermische Belastung aufweisen.

Die Erfindung betrifft auch ein Sicherheits- und/oder Wertdokument gemäß Anspruch 11. Es enthält zumindest zwei miteinander thermisch laminierte Polymerschichten, wobei die Polymerschichten aus gleichen oder verschiedenen Polymeren gebildet sind, deren Grundpolymere gleiche oder verschiedene miteinander reaktive Gruppen tragen, und wobei die reaktiven Gruppen verschiedener Polymerschichten miteinander reagiert sind. Alle zum erfindungsgemäßen Verfahren angebrachten Anmerkungen gelten analog und umgekehrt.

Der Begriff des Grundpolymers bezeichnet eine Polymerstruktur, welche keine unter den eingesetzten Laminierbedingungen reaktive Gruppen trägt. Es kann sich dabei um Homopolymere oder Copolymere handeln. Es sind auch gegenüber den genannten Polymere modifizierte Polymere umfasst.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise zumindest ein Substrat, eine Druckschicht und optional eine transparente Deckschicht auf. Substrat und Deckschicht können ihrerseits aus einer Mehrzahl von Schichten bestehen. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder (organischer) Polymerbasis in Frage.

Als Sicherheitsmerkmale kommen grundsätzlich alle fachüblichen Sicherheitselemente in Frage, unabhängig von ihrer Temperaturempfindlichkeit. Zu den temperaturempfindlichsten Sicherheitsmerkmalen gehören solche, welche biologische Moleküle enthalten, wie beispielsweise Nukleinsäuren (DNA, RNA), Proteine, Enzyme, Antikörper, etc. Des Weiteren sind zu nennen Sicherheitselemente mit elektronischen Komponenten auf Basis dotierter anorganischer Halbleiter, organische Halbleiter und Leiter, und Displaykomponenten (OLED, LCD, etc.). Sicherheitselemente können auch reaktive Komponenten enthalten, welche Schutz gegen Dokumentenmodifikation bieten. Zu den Sicherheitselementen gehören aber auch Substanzen, welche im Zuge der Personalisierung verändert werden. Beispiele hierfür sind Laserinitiatoren, welche auf Bestrahlung mit einem Laser, beispielsweise Nd:YAG Laser, reagieren.

Während vorstehend und nachfolgend im Wesentlichen die Stufen der Herstellung eines Verbundes aus Polymerschichten beschrieben sind, versteht es sich, dass zuvor und danach die üblichen weiteren fachüblichen Schritte der Herstellung eines Sicherheits- und/oder Wertdokuments erfolgen. So kann zumindest eine der Polymerschichten vor dem Laminieren mit einer Druckschicht versehen sein. Des Weiteren können in eine Polymerschicht zumindest ein Teil der einzubringenden verschiedenen Sicherheitselemente bereits integriert sein, sei es aufgebracht oder eingegossen bzw. implantiert. Anschließend an das Laminieren der Polymerschichten kann dann das eigentliche Sicherheits- und/oder Wertdokumente im Wege des Austanzens oder Ausschneidens in fachüblicher Weise gebildet werden. In der Regel bilden beim Laminieren die Polymerschichten einen Verbund, welcher ein Mehrfaches der Größe eines Sicherheits- und/oder Wertdokuments entspricht, so dass aus einem Verbund die Mehrzahl an Sicherheits- und/oder Wertdokumenten erhalten werden kann. Anschließend erfolgt typischerweise eine Personalisierung oder Individualisierung des Sicherheits- und/oder Wertdokuments. Vor oder nach der Personalisierung können noch beidseitig Overlay Folien auflaminiert werden, wobei diese etwas größer als der Verbund sind, so dass die Overlay Folien sich zu den Kanten des Sicherheits- und/oder Wertdokuments verbinden.

Im Folgenden wird die Erfindung anhand von lediglich Ausführungsformen darstellenden Beispielen näher erläutert.

### Beispiel 1: Modifikation von Polycarbonat (PC)

Eingesetzt wird eine Folie bzw. Schicht auf Basis von Bisphenol A Polycarbonat, wobei eine Monomereinheit in der Formel I dargestellt ist. Hierin sind Reste R1, R2, R3, und R4 dargestellt, welche durch eine oder mehrere verschiedene der im allgemeinen Teil der Beschreibung angegebenen reaktiven Gruppen, ggf. mit Spacergruppe, gebildet sind. Dabei kann es sich auch um ein Copolymer handeln, welches mit Monomeren der Formel I und anderen üblichen Monomeren gebildet ist. Die anderen Monomeren können dem Grundmonomer der Formel I entsprechen oder hiervon verschieden sein. Die anderen Monomere können ihrerseits reaktive Gruppen tragen, oder frei von reaktiven Gruppen sein. Anstelle der Formel I können selbstverständlich auch alle anderen fachüblichen Monomere in analoger Weise mit reaktiven Gruppen modifiziert sein.

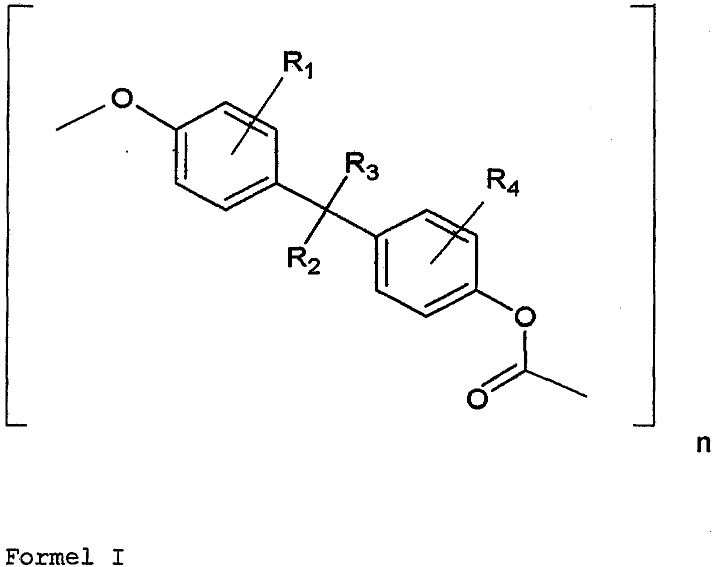

### Beispiel 2: Reaktive Lamination

Zwei benachbarte und miteinander durch Laminieren zu verbindende Schichten bestehen aus einem Polymerwerstoff eines beliebigen fachüblichen Grundpolymers. Das Grundpolymer der ersten Schicht ist mit der reaktiven Gruppe -NCO modifiziert. Das Grundpolymer der zweiten Schicht ist mit der reaktiven Gruppe -OH ausgestattet. Im Zuge des Laminierens reagieren die reaktiven Gruppen der beiden Schichten miteinander, wodurch die beiden Grundpolymere der beiden Schichten covalent über -O-(CO)-NH- Brücken miteinander verbunden werden. Eine Trennung durch Erwärmung auf die Laminiertemperatur oder gar höher führt aufgrund der covalenten Bindungen nicht zu einer Trennung der beiden Schichten.

Analog können die jeweiligen reaktiven Gruppen Epoxy und - COOH sein. Die Brücken werden dann durch -CH-(CH2OH)-O-(CO)- gebildet.

In einer Variante dieses Ausführungsbeispiels können auch eine oder beide Schichten jeweils die verschiedenen reaktiven Gruppen aufweisen. Dann erfolgt nicht nur eine reaktive Koppelung der verschiedenen Schichten untereinander, vielmehr werden auch die verschiedenen reaktiven Gruppen innerhalb der einen Schicht oder beider Schichten miteinander reagieren mit der Folge, das die Glastemperatur der einen Schicht oder beider Schichten angehoben wird.

In der folgenden Tabelle 1 sind beispielhafte Grundpolymere für zwei miteinander zu laminierende Polymerschichten mit Grundpolymeren mit jeweiligen geeigneten reaktiven Gruppen angegeben. Hierbei steht GP für Grundpolymer und RG für reaktive Gruppe.

**Tab. 1**

| GP 1 | RG 1 | GP 1 | RG 2 |
|---|---|---|---|
| PC | NCO | PC | OH |
| PC | NCO/OH | PC | NCO/OH |
| PC | NCO | PET | OH |
| PC | OH | PET | NCO |
| PC | NCO/OH | PET | NCO/OH |
| PC | NCO | PMMA | OH |
| PC | OH | PMMA | NCO |
| PC | NCO/OH | PMMA | NCO/OH |
| PC | NCO | TPU | OH |
| PC | OH | TPU | NCO |
| PC | NCO/OH | TPU | NCO/OH |
| PC | NCO | PE | OH |
| PC | OH | PE | NCO |
| PC | NCO/OH | PE | NCO/OH |
| PC | NCO | PP | OH |
| PC | OH | PP | NCO |
| PC | NCO/OH | PP | NCO/OH |
| PC | NCO | PI | OH |
| PC | OH | PI | NCO |
| PC | NCO/OH | PI | NCO/OH |
| PC | Epoxy | PC | COOH |
| PC | Epoxy/COOH | PC | Epoxy/COOH |
| PC | Epoxy | PET | COOH |
| PC | COOH | PET | Epoxy |
| PC | Epoxy/COOH | PET | Epoxy/COOH |
| PC | Epoxy | PMMA | COOH |
| PC | COOH | PMMA | Epoxy |
| PC | Epoxy/COOH | PMMA | Epoxy/COOH |
| PC | Epoxy | TPU | COOH |
| PC | COOH | TPU | Epoxy |
| PC | Epoxy/COOH | TPU | Epoxy/COOH |
| PC | Epoxy | PE | COOH |
| PC | COOH | PE | Epoxy |
| PC | Epoxy/COOH | PE | Epoxy/COOH |
| PC | Epoxy | PP | COOH |
| PC | COOH | PP | Epoxy |
| PC | Epoxy/COOH | PP | Epoxy/COOH |
| PC | Epoxy | PI | COOH |
| PC | COOH | PI | Epoxy |
| PC | Epoxy/COOH | PI | Epoxy/COOH |

In analoger Weise lassen sich die weiteren Paarungen reaktiver Gruppen, wie im allgemeinen Teil der Beschreibung genannt, einsetzen. Ebenso analog sind Verbunde mit mehr als zwei der genannten Polymerschichten mit jeweils den genannten Grundpolymeren und den genannten reaktiven Gruppen einsetzbar, wobei benachbarte Polymerschichten entsprechend den vorstehenden Beispielen ausgebildet sind.

### Beispiel 3: Herstellung eines Schichtenverbundes

Eingesetzt werden 6 bis 8 Folienlagen mit erfindungsgemäß modifizierten Polymeren. Die einzelnen Bögen auf Basis gleicher oder verschiedener Grundpolymere werden mittels Kantenanschlag oder optoelektronischer Registrierung zueinander positioniert und beispielsweise mittels Ultraschall-Sonotroden an einer Längsseite der Bögen miteinander verbunden. Dies gewährleistet, dass das Laminatpaket beim Einlegen zwischen zwei Pressbleche exakt zueinander positioniert bleibt. Zumindest ein Bogen trägt temperaturempfindliche Sicherheitselemente. Es erfolgt eine Einzelpaketlamination, beispielsweise mittels eines Rundtisch-Heiz-Kühlpressenlaminators. Es erfolgt einer reaktive Laminierung, wie vorstehend beschrieben. Ein solcher Laminator eignet sich bei besonders temperaturempfindlichen Sicherheitselementen, wie biologischen Molekülen, besser als Mehretagen Heiz-Kühl-Transferpressanlagen, da bei letzteren pro Etage bis zu 10 Presspakete verwendet werden und die äußeren Presspakete einer wesentlich höheren Temperatur-Zeit-Beanspruchung unterliegen, als die inneren Presspakete. Es versteht sich, dass im Falle weniger oder gar nicht temperaturempfindlicher Sicherheitselemente die Mehretagen Heiz-Kühl-Transferpressanalage aufgrund deren höherer Laminierkapazität vorzuziehen ist.

### Beispiel 4: Herstellung eines Verbundes mit erhöhter Sicherheit

Ein nochmals verbessertes Sicherheits- und/oder Wertdokument erhält man, wenn als zusätzlich Maßnahme eine zwischen zwei Polymerschichten anzuordnende dritte Polymerschicht Löcher, Ausnehmungen, Aussparungen, oder dergleichen aufweist. Im Zuge des Laminierens dringt das Polymer der beiden äußeren Schichten in die Löcher ein, bis die Löcher völlig ausgefüllt sind. Auf Grund der reaktiven Gruppen erfolgt dabei nicht nur eine reaktive Verbindung der beiden äußeren Schichten mit der mittleren Schicht, sondern vielmehr werden auch die beiden äußeren Schichten in den Bereichen der Löcher miteinander covalent verbunden. Hierdurch wird die mittlere Schicht zusätzlich gleichsam eingeklammert, und ein Delaminieren ist praktisch unmöglich. Lediglich beispielsweise sein als mittlere Schicht eine flexible Leiterplatte auf Basis Polyimid (PI) genannt, welche u.a. eine Antennenspule trägt. Die beiden äußeren Schichten sind auf Basis eines fachüblichen thermoplastischen Polymers gewählt. Der Umfang der äußeren Schichten kann dabei größer als der Umfang der mittleren Schicht gebildet sein, so dass die beiden äußeren Schichten im Zuge des Laminierens die Kanten des Sicherheits- und/oder Wertdokuments bilden und die mittlere Schicht vollständig einbetten.

## Patentansprüche

1. Verfahren zur Herstellung eines Sicherheits- und/oder Wertdokuments mit zumindest einem Sicherheitselement,
wobei das Sicherheits- und/oder Wertdokumente aus zumindest zwei miteinander im Wege der thermischen Laminierung verbundenen Polymerschichten gebildet wird,
wobei das Sicherheitselement im Zuge der thermischen Laminierung zwischen benachbarte Polymerschichten oder in eine Polymerschicht eingebettet wird, und
wobei zumindest eine der Polymerschichten aus einem Polymer mit einer Glastemperatur von weniger als 140 °C gebildet ist,
**dadurch gekennzeichnet,**
**dass** die Polymerschichten aus gleichen oder verschiedenen Polymeren gebildet sind, deren Grundpolymere gleiche oder verschiedene miteinander reaktive Gruppen tragen,
wobei bei einer Laminiertemperatur von weniger als 200°C reaktive Gruppen einer ersten Polymerschicht mit reaktiven Gruppen einer zweiten Polymerschicht reagieren und eine kovalente Bindung miteinander eingehen.

2. Verfahren nach Anspruch 1, wobei die Glastemperatur der zumindest einen Polymerschicht vor der thermischen Laminierung weniger als 120 °C beträgt und wobei die Glastemperatur dieser Polymerschicht nach der thermischen Laminierung durch Reaktion reaktiver Gruppen des Grundpolymers der Polymerschicht miteinander um zumindest 5 °C, vorszugsweise um zumindest 20 °C, höher als die Glastemperatur vor der thermischen Laminierung ist.

3. Verfahren nach Anspruch 1 oder 2, wobei die Laminiertemperatur weniger als 180 °C, vorzugsweise weniger als 150 °C, beträgt

4. Verfahren nach einem der Ansprüche 1 bis 3, wobei die Anzahl, der Polymerschichten im Bereich von 2 bis 30, vorzugsweise im Bereich, von 6 bis 10, liegt, und wobei die Schichtdicken der Polymerschichten jeweils unabhängig voneinander im Bereich von 30 bis 300 µm, vorzugsweise 50 bis 200 µm, liegen.

5. Verfahren nach einem der Ansprüche 1 bis 4, wobei die Polymere der Polymerschichten gleich oder verschieden sind und unabhängig voneinander aus einem Grundpolymer gebildet sind, welches ausgewählt ist aus der Gruppe bestehend aus "PC, PET, PMMA, TPU, PE, PP, PI und Copolymere solcher Polymere".

6. Verfahren nach Anspruch 5, wobei zumindest einer der Polymerschichten aus dem Grundpolymer PC gebildet ist.

7. Verfahren nach einem der Ansprüche 1 bis 6, wobei eine Schichtfolge gebildet wird, worin die aufeinander folgenden Schichten aus den Grundpolymeren PC/PET, PC/PMMA, PC/TPU, PC/PE, PC/PP, PC/PI, PET/PC/PET, PMMA/PC/PMMA, TPU/PC/TPU, PE/PC/PE, oder PP/PC/PP gebildet sind, und wobei optional weitere Schichten angeschlossen werden können, welche aus gleichen oder verschiedenen Grundpolymeren gebildet sind.

8. Verfahren nach einem der Ansprüche 1 bis 7, wobei die reaktiven Gruppen ausgewählt sind aus der Gruppe bestehend aus "-CN, -OCN, -NCO, -NC, -SH, -Sₓ, -Tos, - SCN, -NCS, -H, Epoxy (-CHOCH₂), -NH₂, -NN⁺, -NN-R, - OH, -COOH, -CHO, -COOR, -Hal (-F, -Cl, -Br, -I), -Me-Hal, -Si(OR)₃, -SiHal₃, -CH=CH₂, und -COR", wobei R eine beliebige reaktive oder nicht-reaktive Gruppe sein kann, beispielsweise -H, -Hal, Cl-C20-Alkyl, C3-C20-Aryl, C4-C20-ArAlkyl, jeweils verzweigt oder linear, gesättigt oder ungesättigt, optional substituiert, oder korrespondierende Heterozylen mit einem oder mehreren, gleichen oder verschiedenen Heteroatomen O, N, oder S".

9. Verfahren nach einem der Ansprüche 1 bis 8, wobei die reaktiven Gruppen über eine Spacergruppe mit dem Grundpolymer verbunden sind, welche beispielsweise ausgewählt ist aus der Gruppe bestehend aus "-(CH₂)ₙ-, -(CH₂-CH₂-O)ₙ-, -(SiR₂-O)ₙ-, -(C₆H₄)ₙ-, -(C₆H₁₀)ₙ-, Cl-Cn-Alkyl, C3-C(n+3)-Aryl, C4-C(n+4)-ArAlkyl, jeweils verzweigt oder linear, gesättigt oder ungesättigt, optional substituiert, oder korrespondierende Heterozyklen mit einem oder mehreren, gleichen oder verschiedenen Heteroatomen O, N, oder S" mit n=1 bis 20, vorzugsweise 1 bis 10.

10. Verfahren nach einem der Ansprüche 1 bis 9, wobei das Sicherheitselement eine maximal zulässige thermische Belastung von 190 °C, vorzugsweise von 150°C, aufweist.

11. Sicherheits- und/oder Wertdokument enthaltend zumindest zwei miteinander thermisch laminierte Polymerschichten, wobei die Polymerschichten aus gleichen oder verschiedenen Polymeren gebildet sind, deren Grundpolymere gleiche oder verschiedene miteinander reaktive Gruppen tragen, wobei die reaktiven Gruppen verschiedener Polymerschichten miteinander reagiert sind und wobei das Sicherheits-und/oder Wertdokumente ein Sicherheitsmerkmal oder mehrere Sicherheitsmerkmale mit einer maximal zulässige thermische Belastung von 190 °C enthält.

12. Sicherheits- und/oder Wertdokument nach Anspruch 11, wobei die maximal zulässige thermische Belastung des Sicherheitsmerkmals 150 °C beträgt.

## Claims

1. A method for producing a security and/or value document with at least one security element, wherein the security and/or valuable document is formed from at least two polymer layers connected to each other by thermal lamination,
wherein the security element is embedded during thermal lamination between adjacent polymer layers or in a polymer layer, and
wherein at least one of the polymer layers is formed from a polymer having a glass transition temperature of less than 140 °C,
**characterized in**
**that** the polymer layers are formed of the same or different polymers, the base polymers of which carry identical or different groups being reactive with each other,
wherein at a lamination temperature of less than 200 °C reactive groups of a first polymer layer react with reactive groups of a second polymer layer and form a covalent bond with each other.

2. The method of claim 1, wherein the glass transition temperature of at least one polymer layer is less than 120 °C prior to thermal lamination, and wherein by reaction of reactive groups of the base polymer of the polymer layer with each other, the glass transition temperature of this polymer layer after thermal lamination is higher by at least 5 °C, preferably at least 20 °C higher than the glass transition temperature prior to thermal lamination.

3. The method according to claim 1 or 2, wherein the laminating temperature is less than 180 °C, preferably less than 150 °C.

4. The method according to any one of claims 1 to 3, wherein the number of polymer layers is in the range from 2 to 30, preferably from 6 to 10, and wherein the layer thicknesses of the polymer layers are each independently in the range from 30 to 300 microns, preferably 50 to 200 microns.

5. The method according to any one of claims 1 to 4, wherein the polymers of the polymer layers are the same or different and are independently formed from a base polymer selected from the group consisting of "PC, PET, PMMA, TPU, PE, PP, PI, and copolymers of such polymers".

6. The method according to claim 5, wherein at least one of the polymer layers is formed from the base polymer PC.

7. The method according to any one of claims 1 to 6, wherein a layer sequence is formed, wherein the successive layers are formed from the base polymers PC/PET, PC/PMMA, PC/TPU, PC/PE, PC/PP, PC/PI, PET/PC/PET, PMMA/PC/PMMA, TPU/PC/TPU, PE/PC/PE or PP/PC/PP, and wherein optionally further layers can be connected, which are formed from identical or different base polymers.

8. The method according to any one of claims 1 to 7, wherein the reactive groups are selected from the group consisting of "-CN, -OCN, -NCO, -NC, - SH, -Sₓ, -Tos, -SCN, -NCS, -H, epoxy (-CHOCH₂),-NH₂, -NN⁺, -NN-R, -OH,-COOH, -CHO, -COOR, -Hal (-F, -Cl, -Br, -I), -Me-Hal, -Si(OR)₃, -SiHal₃, -CH=CH₂, and -COR", wherein R can be any reactive or nonreactive group such as -H, -Hal, C1-C20 alkyl, C3-C20 aryl, C4-C20 aralkyl, in each case branched or linear, saturated or unsaturated, optionally substituted, or corresponding heterocyclic compounds with one or more identical or different heteroatoms O, N, or S".

9. The method according to any one of claims 1 to 8, wherein the reactive groups are linked via a spacer group to the base polymer, which is for example selected from the group consisting of "-(CH₂)ₙ-, -(CH₂-CH₂-O)ₙ-, -(SiR₂-O)n-, -(C₆H₄)ₙ-, (C₆H₁₀)ₙ-, C1-Cn alkyl, C3-C(n+3) aryl, C4-C(n+4) aralkyl, in each case branched or linear, saturated or unsaturated, optionally substituted, or corresponding heterocyclic compounds with one or more identical or different heteroatoms O, N, or S", where n = 1 to 20, preferably 1 to 10.

10. The method according to any one of claims 1 to 9, wherein the security element has a maximum admissible thermal load of 190 °C, preferably of 150 °C.

11. A security and/or value document, comprising at least two mutually thermally laminated polymer layers, wherein the polymer layers are formed from identical or different polymers, wherein the base polymers thereof carry identical or different groups being reactive with each other, wherein said reactive groups of different polymer layers are reacted with each other, and wherein the security and/or valuable document comprises a security feature or a plurality of security features having a maximum admissible thermal load of 190 °C.

12. The security and/or valuable document according to claim 11, wherein the maximum admissible thermal load of the security feature is 150 °C.

## Revendications

1. Procédé de fabrication d'un document de sécurité et/ou de valeur comportant au moins un élément de sécurité,
dans lequel le document de sécurité et/ou de valeur est formé à partir d'au moins deux couches polymères assemblées par laminage thermique,
dans lequel l'élément de sécurité est incorporé entre des couches polymères voisines ou dans une couche polymère lors du laminage thermique, et dans lequel au moins une des couches polymères est formée à partir d'un polymère dont la température de transition vitreuse est inférieure à 140 °C,
**caractérisé en ce**
**que** les couches polymères sont formées à partir de polymères identiques ou différents dont les polymères de base portent des groupes réactifs entre eux qui sont identiques ou différents,
dans lequel des groupes réactifs d'une première couche polymère réagissent, à une température de laminage inférieure à 200 °C, avec des groupes réactifs d'une deuxième couche polymère et forment une liaison covalente entre eux.

2. Procédé selon la revendication 1, dans lequel la température de transition vitreuse d'au moins une couche polymère est inférieure à 120 °C avant le laminage thermique, et dans lequel par réaction de groupes réactifs du polymère de base de la couche polymère entre eux, la température de transition vitreuse de cette couche polymère après laminage thermique est supérieure par au moins 5 °C, de préférence supérieure par au moins 20 °C à la température de transition vitreuse avant le lami-nage thermique.

3. Procédé selon la revendication 1 ou 2, dans lequel la température de laminage est inférieure à 180 °C, de préférence inférieure à 150 °C.

4. Procédé selon une des revendications 1 à 3, dans lequel le nombre des couches polymères est compris dans la gamme entre 2 et 30, de préférence entre 6 et 10, et dans lequel les épaisseurs de couche des couches polymères sont chacune indépendamment comprises dans la gamme entre 30 et 300 µm, de préférence 50 et 200 µm.

5. Procédé selon une des revendications 1 à 4, dans lequel les polymères des couches polymères sont identiques ou différents et sont indépendamment formés à partir d'un polymère de base choisi parmi le groupe consistant en "PC, PET, PMMA, TPU, PE, PP, PI, et copolymères de tels polymères".

6. Procédé selon la revendication 5, dans lequel au moins une des couches polymères est formée à partir du polymère de base PC.

7. Procédé selon une des revendications 1 à 6, dans lequel une séquence de couches est formée, dans lequel les couches successives sont formées à partir des polymères de base PC/PET, PC/PMMA, PC/ TPU, PC/PE, PC/PP, PC/PI, PET/ PC/PET, PMMA/PC/ PMMA, TPU / PC / TPU, PE / PC / PE ou PP / PC / PP, et dans lequel optionnellement des couches additionnelles peuvent être prévues, qui sont formées à partir de polymères de base identiques ou différents.

8. Procédé selon une des revendications 1 à 7, dans lequel les groupes réactifs sont choisis parmi le groupe consistant en "-CN, -OCN, -NCO, - NC, -SH, -Sₓ, -Tos, -SCN, -NCS, -H, époxy (-CHOCH₂),-NH₂, -NN⁺, -NN-R, -OH,-COOH, -CHO, -COOR, -Hal (-F, -Cl, -Br, -I), -Me-Hal, -Si(OR)₃, -Si-Hal₃, -CH=CH₂, et -COR", dans lequel R peut être un groupe réactif ou non réactif n'importe lequel comme p.ex. -H, -Hal, alkyle en C1-C20, aryle en C3-C20, aralkyle en C4-C20, chacun ramifié ou linéaire, saturé ou non saturé, optionnellement substitué, ou des composés hétérocycliques correspondants avec un ou plusieurs hétéroatomes O, N, ou S identiques ou différents".

9. Procédé selon une des revendications 1 à 8, dans lequel les groupes réactifs sont reliés par un groupe espaceur au polymère de base, qui est par exemple choisi parmi le groupe consistant en "-(CH₂)ₙ-, -(CH₂-CH₂-O)ₙ-, -(SiR₂-O)ₙ-, -(C₆H₄)ₙ-, - (C₆H₁₀)ₙ-, alkyle en C1-Cn, aryle en C3-C(n+3), aralkyle en C4-C(n+4), chacun ramifié ou linéaire, saturé ou non saturé, optionnellement substitué, ou des composés hétérocycliques correspondants avec un ou plusieurs hétéroatomes O, N, ou S identiques ou différents", dans lequel n = 1 à 20, de préférence 1 à 10.

10. Procédé selon une des revendications 1 à 9, dans lequel l'élément de sécurité a une résistance thermique maximale admissible de 190 °C, de préférence de 150 °C.

11. Document de sécurité et/ou de valeur, comprenant au moins deux couches polymères thermiquement laminées entre eux, dans lequel les couches poly-mères sont formées à partir de polymères identiques ou différents, dans lequel les polymères de base de ceux-ci portent des groupes réactifs entre eux qui sont identiques ou différents, dans lequel ces groupes réactifs de couches polymères différentes sont réagis entre eux, et dans lequel le document de sécurité et/ou de valeur comprend une caractéristique de sécurité ou une pluralité de caractéristiques de sécurité ayant une résistance thermique maximale admissible de 190 °C.

12. Document de sécurité et/ou de valeur selon la revendication 11, dans lequel la résistance thermique maximale admissible des la caractéristique de sécurité est de 150 °C.
